# EUROPEAN PATENT APPLICATION

(11) **EP 2 525 127 A1**
(43) Date of publication of application: **21.11.2012**
(21) Application number: 12168190.2
(22) Date of filing: 16.05.2012
(51) Int. Cl.: F16L 41/03

(54) **Module for a modular distributor**

(30) Priority: 18.05.2011 IT MO20110117
(71) Applicant: SCM Group S.p.A., 47900 Rimini (IT)
(72) Inventor: Amadori, Davide, 61020 S. Angelo in Lizzola (PU) (IT)
(74) Representative: Villanova, Massimo

(57) **Abstract**

In a modular distributor for distributing compressed air between various pneumatic actuators, each module (1) comprises a central conduit portion extending between a first port (5) and a second port (6), in which the first port (5) of each module is coupled with a radial seal with the second port (6) of the adjacent module. A third port (11), that is connected as a branch off the central conduit portion, is intended for connection with a pneumatic actuator.

## Description

### Background of the invention

The invention relates to a module for a modular distributor and a modular distributor made with the module, in particular for distributing an operating fluid (for example for the supply of compressed air or for the discharge of used air) to two or more applications, for example, pneumatically driven actuators.

Specifically, but not exclusively, the invention can be used for connecting a plurality of applications that use an operating fluid (for example pneumatic actuators) to the supply and/or the discharge of the operating fluid (for example to a source of compressed air or a discharge of used air).

In particular, reference is made to a distributor with a main conduit, that traverses the distributor longitudinally and is intended to be connected to the supply or discharge of the operating fluid (compressed air), and a plurality of distribution conduits, that branch off the main conduit and are intended to be connected (delivery or discharge) with the various applications. Still more in particular, reference is made to a static distributor, i.e. in which movable elements (shutters or the like), which are configured for controlling (for example interruption or variation) the flow into the main conduit and/or into the various distribution conduits, are not provided.

A distributor of the type disclosed above is already known that is operationally associated with a group of pneumatic actuators, used in the ambit of the same operating plant or apparatus and normally arranged near the distributor but generally with different arrangements and/or orientations. A distributor is known in which the main conduit and the distribution conduits that branch off therefrom are defined inside at least one block of material that has a plurality of fluid access ports, each of which is arranged at the end of a respective distribution conduit. The various access ports will have to be connected in an appropriate manner to the various pneumatic actuators of the plant.

One drawback of a distributor of known type is the adaptation of the number of applications of the plant with which the distributor is operationally associated each time. In general, the distributor will have a number of distribution ports that is at least sufficient for connecting with the various applications of the plant. If the number of applications of the plant is less than the maximum number of distribution ports available on the distributor, the distribution ports not in use will have to be shut (for example with a sealing plug).

Another drawback of a distributor of known type is the suitability for the specific arrangement of the various applications in the ambit of the work plant. This arrangement can in fact vary each time according to the needs of the specific plant. It is in particular observed that the orientation of the distribution ports with which the distributor is provided can in certain cases be inconvenient for a practical and immediate connection of the distribution ports to the respective applications.

### Summary of the invention

One object of the invention is to make a module and/or a modular distributor that is able to remedy one or more of the aforesaid drawbacks of the prior art.

One advantage is to provide a distributor of modular type that can be composable in function of the desired number of connections with the various applications.

One advantage is to make available a distributor in which the distribution ports, which have to be connected to the various applications, can be oriented in a desired manner to make the connection easy and practical.

One advantage is to assemble a modular distributor having the desired number and arrangement of distribution ports to be connected to the various applications.

One advantage is to enable the distributor to be assembled rapidly and simply.

One advantage is to enable the modular distributor to be assembled without the need to use screw or adhesive connecting means.

One advantage is to provide a modular distributor that uses a limited number of types of module, in particular one sole type of module.

One advantage is that the distributor can be used in different applications and can meet the most widely varying needs, in particular in terms of the number of connections and the orientation thereof.

Such objects and advantages, and still others, are achieved by the module and by the modular distributor according to one or more of the following claims.

### Brief description of the drawings

The invention can be better understood and implemented with reference to the attached drawings that illustrate an embodiment thereof by way of non-limiting example.

Figure 1 is a perspective view of an example of a distributor module according to the invention.

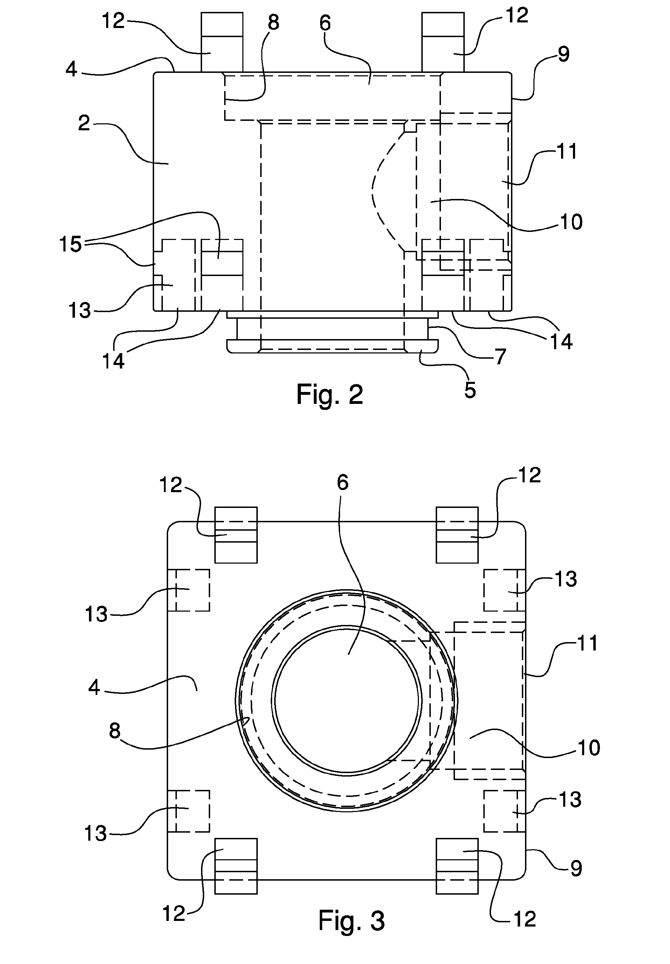

Figure 2 is a side view of the distributor module in figure 1.

Figure 3 is a side view from the upper side of figure 2.

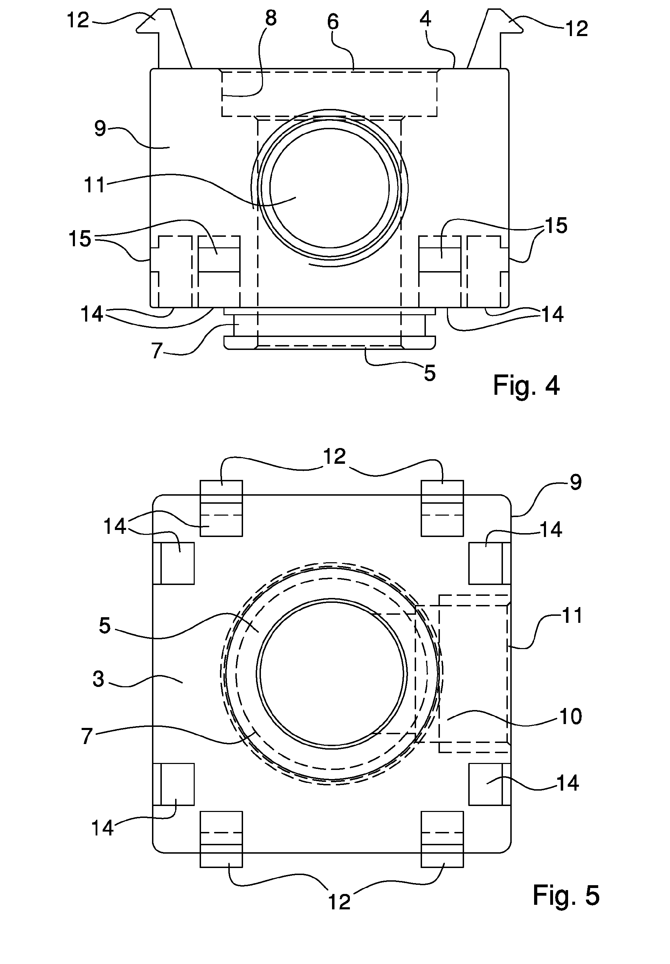

Figure 4 is a side view from the right side of figure 2.

Figure 5 is a side view from the lower side of figure 2.

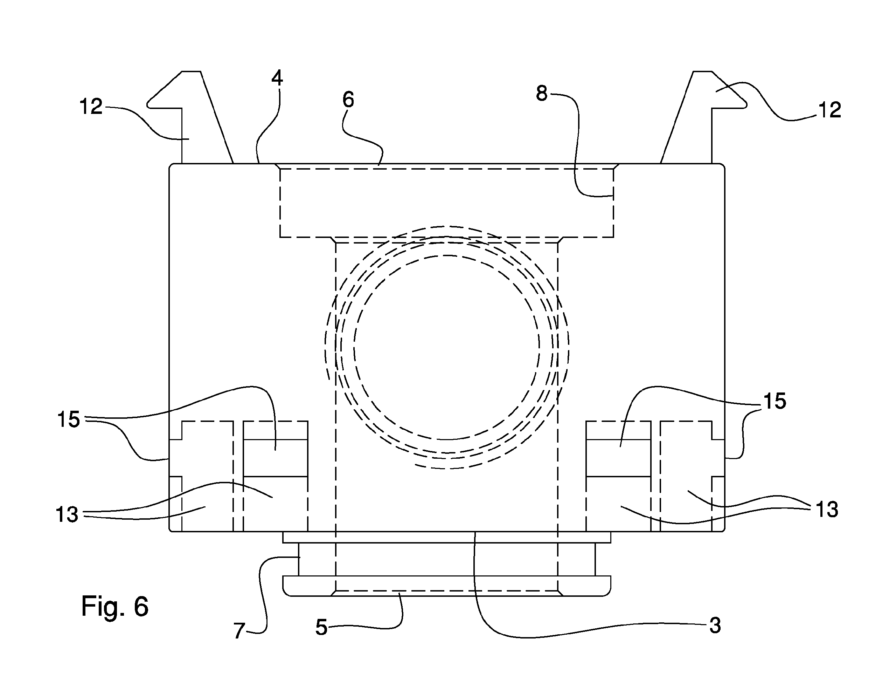

Figure 6 is a side view from the left side of figure 2.

Figure 7 is a perspective view of a section of the distributor module in figure 1.

Figure 8 is a perspective view of an assembly step of a series of modules like the one in figure 1 to make a distributor according to the invention.

Figure 9 is a perspective view of the distributor assembled with the modules in figure 8.

### Detailed description

With reference to the aforesaid figures, with 1 a module has been indicated overall for a modular distributor made from the assembly of two or more modules joined together. The modules can be identical to one another, as in the specific case. The modular distributor is constructed in the example with modules of the same type.

Each module 1 comprises a main body 2 that can be made, for example, of a monobloc piece. The main body 2 can be made, as in this case, of plastics to which loads of another material can be added, for example powder additives. The main body 2 can comprise, as in the specific case, a monobloc made of nylon loaded with vitreous material. The main body 2 can be made, for example, by (injection) moulding of plastics. The main body 2 can comprise, as in this case, a substantially parallelpipedon-shaped monobloc.

The main body 2 has a first face 3 and a second face 4 opposite the first face 3. The first and the second face 3 and 4 can be substantially flat faces and be parallel to one another. Inside the main body 2 a portion of main conduit is defined (that terminates at an end on the first face 3 and on the opposite end on the second face 4) that can be, as in this case, on a rectilinear axis and/or with a constant transversal cross section. The portion of main conduit can be, as in this case, perpendicular to the first face 3 and/or to the second face 4 of the main body.

The portion of main conduit can have, as in this case, a first end that terminates with a first port 5 arranged on the first face 3 and a second end that terminates with a second port 6 arranged on the second face 4. The first port 5 of each module will be couplable with the second port 6 of another module, in particular according to a coupling axis (for example the linear axis of the portion of main conduit) in such a manner as to join the portions of main conduit of two modules 1 for contributing to forming a single main conduit of the modular distributor assembled by joining various modules.

The first port 5 will have a first annular seal zone and the second port 6 will have a second annular seal zone, thereby the first annular seal zone of each module 1 will be couplable with the second annular seal zone of another module 1. Such annular seal zones will be made in such a manner as to give rise to a radial seal. In the case in point the first annular seal zone can comprise an annular seal (which is not shown, for example an O-ring) housed in a circular external seat 7 protruding axially, in this case, from the first face 3. The second seal zone will comprise, in this specific case, an internal seal surface 8 (of cylindrical form) that is recessed with respect to the second face 4. The circular external seat 7 and the cylindrical internal seal surface 8 are coaxial with the aforesaid coupling axis.

The seal coupling between the first port 5 of one module 1 and the second port 6 of another module 1 is effective in at least two (or three) different configurations of the modules 1. In these two (or three) different configurations each module 1 has two (or three) different angular arrangements around the aforesaid coupling axis, with respect to the other module 1.

The main body 2 has at least one third face 9 that is transverse (for example orthogonal) to the first face 3 and to the second face 4. A distribution conduit 10 is defined inside the main body 2. This distribution conduit 10 terminates at one end in an intermediate zone of the aforesaid portion of main conduit and at an opposite end in a third port 11 arranged on the third face 9. The third port 11 is connectable in a fluid-tight manner with an external application. The third port 11, which in the case in point is provided with a thread for the screw connection with an external conduit connected to the external application, can be set up for any other known type of (mechanical) fluid-tight connection with the external application.

Each module 1 is provided with first connecting means and with second connecting means, in which the first connecting means of each module 1 is configured in such a manner as to be coupled with the second connecting means of another module 1. In particular, the first and second connecting means are designed in such a way as to be operational in both the aforesaid different configurations, in which the modules are rotated in relation to one another around the coupling axis of the ports 5 and 6 of the modules.

The first connecting means comprises, in the case in point, at least one first restrained joint element 12, for example of the protruding type, and the second connecting means comprises at least two second restrained joint elements 13, for example of the notch type. The first restrained element 12 of each module 1 can be engaged with the two second restrained elements 13 of the other module 1 at, respectively, the two aforesaid different configurations, in which the modules have two different reciprocal angular arrangements.

Each first restrained joint element 12 and/or each second restrained joint element 13 can comprise, as in this case, restrained joint elements of elastic type. More in particular, the first connecting means comprises at least one joint flap that protrudes from the main body 2. The second connecting means comprises a cavity that is obtained in the main body 2 and is open on two sides of the main body to define a main opening 14 to enable a flap to enter and exit and an auxiliary opening 15 to encourage the elastic hooking of the flap and to enable an operator to access the engaged flap from the exterior to disengage it.

In the case in point the first connecting means comprises four joint flaps that protrude from the main body, for example from the first face 3 or from the second face 4 (as in this case), and the second connecting means comprises eight cavities, each of which is obtained in the main body and is open on two sides of the main body to define a main opening 14 and an auxiliary opening 15. The four flaps are arranged, for example, on the vertices of a rectangle and the eight cavities are arranged, for example, on the vertices of two rectangles, in such a manner that the four flaps of each module 1 can be engaged each time with four cavities of the other module 1, at four different configurations in such a manner that one module 1 is rotated in relation to the other module by 90° around the coupling axis.

The first connecting means and the second connecting means are configured to make a resolvable type of connection. In the case in point, each flap can be disengaged from the respective cavity in which it is inserted by removing the flap (for example manually) through an action exerted through the auxiliary opening 15.

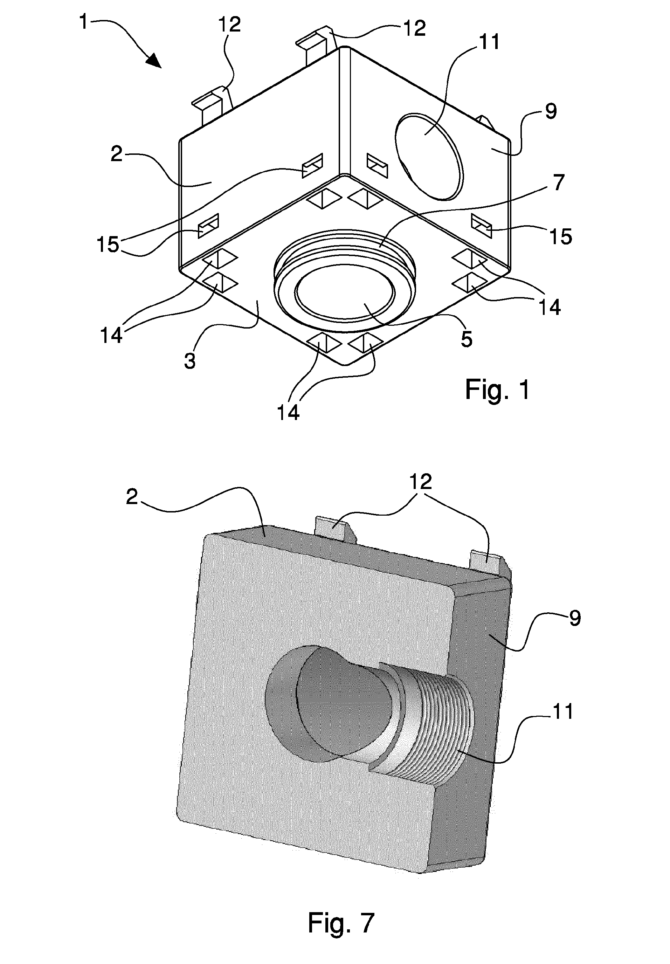

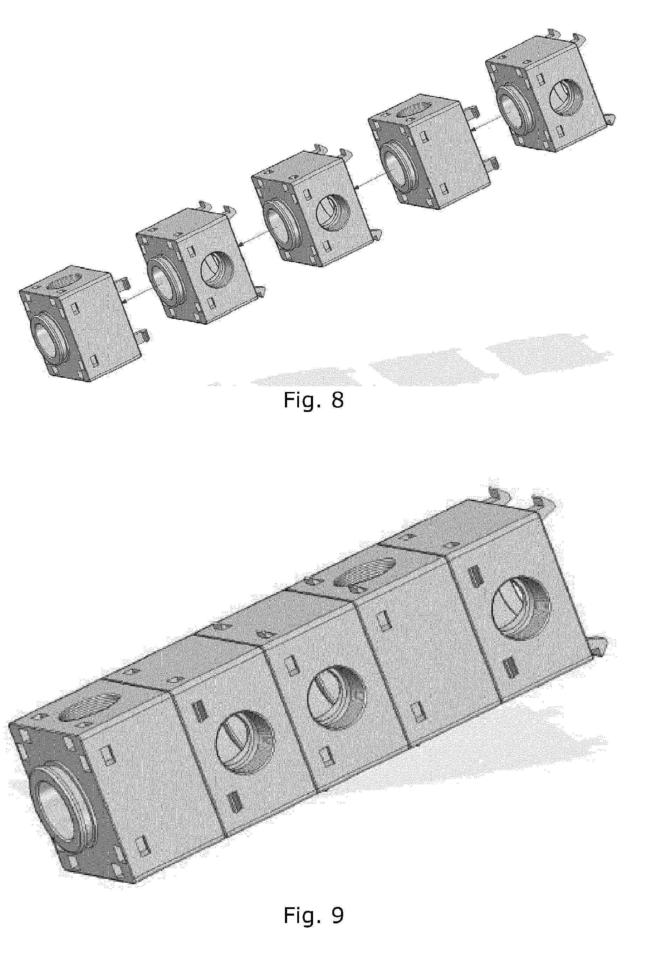

In figures 7 and 8 one of two possible distributors is shown that are makable by joining two or more of the modules disclosed above. The first port 5 of a module is coupled coaxially, in a fluid-tight manner, according to the coupling axis, with the second port 6 of the adjacent module. The union of the various modules forms a central main conduit (extending axially, in this case with a rectilinear axis) from which the various distribution conduits 10 and the corresponding third ports 11 branch off. The sealing means that operates between two adjacent modules for the seal of the main central conduit can operate, as in this case, to give rise to a static radial seal.

It should be noted that the distributor is composable in function of the number of connections necessary for the various applications. Further, the various connections (in the case in point the various third ports 11) can be oriented in a desired manner, at the moment of assembly of the distributor, with the possibility of choice between different orientations (in the case in point four different angular positions arranged at 90°). It is possible to provide three angular positions arranged at 120° (for example with a module in the shape of a triangular prism) or five angular positions arranged at 72° (for example with a module in the shape of a pentagonal prism), or six angular positions arranged at 60° (for example with a module in the shape of a hexagonal prism), or eight angular positions arranged at 45° (for example with a module in the shape of an octagonal prism), or three or more angular positions that define two or more angles that are different from one another. It is in particular possible to provide two or more angular positions that define at least one angle that is less than 180°.

In the case in point each module is provided with a distribution conduit 10 and with a corresponding third port 11. It is possible to provide (in addition to or as an alternative to the module 1 disclosed above) another type of module (not illustrated) having two or more distribution conduits and an equal number of corresponding third ports.

The connecting means that (mechanically) connects two adjacent modules, and that in the case in point is of the elastic joint type, can be configured in such a manner as to permit set (moderate) axial play (in the direction of the coupling axis between the ports 5 and 6 of the main central conduit). This axial play permits a certain facility of assembly and dismantling of the modular distributor and at the same time does not adversely affect the efficiency of the distributor. In particular, the (radial) seal between the ports 4 and 5 of each pair of adjacent modules remains effective even in the presence of small reciprocal axial movements of the modules, as the first seal means (the annular gasket, for example, in the shape of an O-ring) is operational on a (cylindrical) seal surface having a set axial extent.

## Claims

1. Module (1) for a modular distributor for fluids comprising two or more said modules (1) that are joined together, each module comprising a main body (2) having a first face (3) and a second face (4) opposite said first face, a portion of main conduit being defined in said main body, said portion of main conduit having a first end that ends at a first port (5) arranged on said first face and a second end that ends at a second port (6) arranged on said second face, the first port (5) of each module being couplable according to a coupling axis for coupling with the second port (6) of another of said modules such as to join fluid-tightly the main conduit portions of the two modules for contributing to form a single main conduit of the modular distributor, said first port having a first annular seal zone and said second port having a second annular seal zone (8), the first annular seal zone of each module being couplable with the second annular seal zone of another module such as to make a radial seal that is effective in at least two different configurations of the modules, in said at least two different configurations each module having two different angular arrangements around said coupling axis in relation to another module, said main body (2) having a least a third face (9) that is transverse to said first face (3) and to said second face (4), at least one distribution conduit (10) being defined inside said main body, said at least one distribution conduit (10) ending at one end in an intermediate zone of said main conduit and at an opposite end in a third port (11) arranged on said third face (9), said third port being fluid-tightly connectable with an outside application, each module further comprising first connecting means (12) and second connecting means (13), the first connecting means of each module being configured to couple with the second connecting means of another module in said at least two different configurations.

2. Module according to claim 1, wherein said first connecting means comprises at least a first protruding or recessed restraining element (12), and wherein said second connecting means comprises at least two second respectively recessed or protruding restraining elements (13), said first restraining element of each module being able to engage each time with said at least two second restraining elements of another module, respectively in said at least two different configurations.

3. Module according to claim 2, wherein said first restraining element (12) and/or said at least two second restraining elements (13) comprise restraining elements of elastic type.

4. Module according to claim 3, wherein said first connecting means and/or said second connecting means comprises at least one restraining flap that protrudes from said main body (2), for example from said first face (3) or from said second face (4), and at least one cavity that is obtained in said main body and is open on two sides of said main body defining a main opening (14) to enable said flap to enter and exit and an auxiliary opening (15) to promote the elastic hooking of the flap and/or to give an operator access to disengage the flap.

5. Module according to claim 3 or 4, wherein said first connecting means and/or said second connecting means comprises four restraining flaps that protrude from said main body (2) and eight cavities, each of which is obtained in said main body, said four flaps being arranged at the vertices of a rectangle and said eight cavities being arranged at the vertices of two rectangles in such a manner that the four flaps of each module can engage each time with four cavities of the another module at least two, for example four, different configurations in which a module is rotated in relation to another module by 90° around the coupling axis.

6. Module according to any preceding claim, wherein said first connecting means and said second connecting means are configured to make a resolvable connection.

7. Module according to any preceding claim, wherein said first seal zone comprises an annular gasket housed in a circular external seat (7) protruding axially from said first or second face, and wherein said second seal zone comprises a cylindrical internal seal surface (8) receding from said second or first face, said external seat (7) and said internal seal surface (8) being coaxial to one another and to said coupling axis.

8. Module according to any preceding claim, wherein said third face (9) is orthogonal to said first face (3) and to said second face (4).

9. Module according to any preceding claim, wherein said first connecting means is arranged at least partially on said first face (3), or on said second face (4), and wherein said second connecting means is arranged at least partially on said second face (4), or on said first face (3).

10. Module according to any preceding claim, wherein, in said two different angular arrangements, said module is rotated with respect to the other module by an angle that is less than 180°, for example 45°, or 60°, or 72°, or 90°, or 120°, around said coupling axis.

11. Modular distributor comprising two or more modules made according to any preceding claim and which are joined together with the first port (5) of each module fluid-tightly sealed according to said coupling axis to the second port (6) of an adjacent module joining the main conduit portions of the two modules to form a single main conduit of the modular distributor.
